Europäisches Patentamt

European Patent Office

Office européen des brevets

(11) Veröffentlichungsnummer: **0 118 054**
**B1**

(12) # EUROPÄISCHE PATENTSCHRIFT

(45) Veröffentlichungstag der Patentschrift:
30.04.86

(21) Anmeldenummer: 84101323.8

(22) Anmeldetag: 09.02.84

(51) Int. Cl.⁴: **H 02 M 3/155, H 02 M 3/33**

(54) Getaktetes Speisegerät mit Gleichspannungseingang.

(30) Priorität: 28.02.83 CH 1088/83

(43) Veröffentlichungstag der Anmeldung:
12.09.84 Patentblatt 84/37

(45) Bekanntmachung des Hinweises auf die Patenterteilung:
30.04.86 Patentblatt 86/18

(84) Benannte Vertragsstaaten:
CH DE FR LI SE

(56) Entgegenhaltungen:
DE - A - 2 817 204
GB - A - 1 594 400

PATENTS ABSTRACTS OF JAPAN; Band 6, Nr. 155, 17.
August 1982, Seite 159E125
U. Tietze, Ch. Schenk: Halbleiter-Schaltungstechnik, 5.
Auflage, S. 391-394, Springer-Verlag 1980

(73) Patentinhaber: BBC Aktiengesellschaft Brown, Boveri &
Cie., Haselstrasse, CH-5401 Baden (CH)

(72) Erfinder: Mastner, Georg, Dr., Loonstrasse 5,
CH-5443 Niederrohrdorf (CH)

## Beschreibung

Die Erfindung bezieht sich auf ein getaktetes Speisegerät mit Gleichspannungs-Eingang, das einen von der Ausgangsspannung gesteuerten Pulsbreitenmodulator und mindestens einen von diesem betätigten Schalter, sowie ausgangsseitig einen aus einer Induktivität und einer Kapazität aufgebauten Tiefpassfilter enthält. Dabei wird eine am Eingang liegende Gleichspannung durch den Schalter zerhackt und die so erzeugte Wechselspannung durch den ausgangsseitigen Tiefpassfilter geglättet. Durch Rückkopplung wird der Pulsbreitenmodulator so gesteuert, dass die Ausgangsspannung annähernd einen vorgegebenen Sollwert einhält.

Derartige getaktete Speisegeräte werden eingesetzt, um aus einer eventuell schwankenden Gleichspannung mit einem hohen Wirkungsgrad konstante Gleichspannung zu erzeugen, welche sich z.B. zur Speisung elektronischer Geräte eignet.

Es ist ein getaktetes Speisegerät (Buck-Regler) gemäss dem Oberbegriff des Anspruchs 1 bekannt (International Semiconductor Databook 1981, S. 731-733 der Unitrode Corporation oder U. Tietze, Ch. Schenk: Halbleiter-Schaltungstechnik, 5. Auflage, S. 391-394, Springer-Verlag 1980), bei welchem ein vom Pulsbreitenmodulator betätigter Schalter zwischen dem Eingang und dem Tiefpassfilter liegt und eine Freilaufdiode den Eingang des Tiefpassfilters mit dem Nullpunkt, z.B. Erde verbindet.

Weiters ist ein getaktetes Speisegerät gemäss dem Oberbegriff des Anspruchs 1 bekannt (International Semiconductor Databook 1981, S. 733, 734), welches einen Transformator mit symmetrischer Primär- und Sekundärwicklung enthält, wobei der mittlere Anschluss der Primärwicklung mit einem Gleichspannungs-Eingang und die äusseren Anschlüsse je über einen vom Pulsbreitenmodulator betätigten Schalter mit Erde verbunden sind, während die Sekundärwicklung zusammen mit zwei Dioden einen Vollweggleichrichter bildet, dessen Ausgang mit dem Eingang des Tiefpassfilters verbunden ist.

Bei solchen getakten Speisegeräten begrenzt die Induktivität des Tiefpassfilters die Geschwindigkeit des Stromanstieges auf einen für die richtige Funktion der Schaltung zulässigen Maximalwert. Wird an das spannungslose Speisegerät eine Eingangsspannung angelegt, so steigt der Strom durch die Induktivität nur langsam an, die Kapazität des Tiefpassfilters wird entsprechend langsam aufgeladen und die Ausgangsspannung erreicht ihren Sollwert mit einer beträchtlichen Verzögerung, die umso grösser ist, je tiefer die Frequenz des Zerhackers und je höher die Dynamik des Laststromes ist, die bei vorgeschriebener Konstanz der Ausgangsspannung verkraftet werden muss und je grösser folglich die Komponenten des Tiefpassfilters dimensioniert sind.

Es sind weitere symmetrische Zerhackerschaltungen bekannt, die mit konstantem Tastverhältnis arbeiten und wo an den Ausgang des Vollweggleichrichters nur ein Kondensator zur Glättung der Ausgangsspannung geschaltet ist. Diese Zerhacker weisen keine Stabilisator-Wirkung auf. Die Ausgangsspannung ist proportional zur Eingangsspannung, wobei die Proportionalitätskonstante ungefähr dem Verhältnis der Anzahl der Sekundärwindungen zur Anzahl der Primärwindungen des Transformators entspricht. Beim Einschalten der Eingangsspannung wird der Kondensator am Ausgang schnell aufgeladen; die Geschwindigkeit der Aufladung ist nur durch ohmsche Widerstände der Transformator-Wicklungen und der elektronischen Schalter zusammen mit der Dimensionierung des Kondensators bestimmt.

Für Anwendungen, wo neben der Stabilisator-Wirkung auch ein möglichst schnelles Erreichen des Sollwertes der Ausgangsspannung nach dem Anlegen der Eingangsspannung verlangt wird, eignet sich keine dieser Schaltungen.

Ein Anwendungsfall, bei dem derartige Anforderungen auftreten, ist z.B. die Stromversorgung von Geräten zum Ueberwachen einer Leitung (z.B. Messwandler), oder von Hilfsgeräten solcher Geräte, von der zu überwachenden Leitung.

Hier will die Erfindung Abhilfe schaffen. Die Erfindung, wie sie in den Ansprüchen gekennzeichnet ist, löst die Aufgabe, ein gattungsgemässes getaktetes Speisegerät zu schaffen, bei welchem die Ausgangsspannung nach Anlegen einer Eingangsspannung mit sehr geringer Verzögerung wenigstens annähernd ihren Sollwert erreicht.

Die Vorteile der Erfindung werden im wesentlichen dadurch erreicht, dass die Induktivität des Tiefpassfilters in einem gattungsgemässen Speisegerät durch eine Ueberbrükkungsschaltung überbrückt wird, deren Impedanz höchstens einen im Vergleich mit besagter Induktivität geringen induktiven Anteil aufweist und welche leitet, falls die Ausgangsspannung unterhalb eines Mindestwertes, welcher nicht höher als der Sollwert derselben ist, liegt und andernfalls nicht leitet. Dadurch wird die Kapazität des Tiefpas.sfilters sogleich nach Anlegen einer Eingangsspannung durch einen rasch ansteigenden, hohen Ladestrom schnell aufgeladen, bis der gewählte Mindestwert der Ausgangsspannung erreicht ist. Sobald durch die Induktivität des Tiefpassfilters genügend Strom zur Aufrechterhaltung dieses Mindestwertes fliesst, leitet die Ueberbrückungsschaltung nicht mehr.

Im folgenden wird die Erfindung anhand von lediglich Ausführungswege darstellenden Zeichnungen näher erläutert:

Es zeigt:

Fig. 1 das Schaltbild eines erfindungsgemässen Gleichspannungswandlers nach einer ersten Ausführungsform:

Fig. 2 das Schaltbild eines erfindungsgemässen Gleichspannungswandlers nach einer zweiten Ausführungsform;

Fig. 3 ein Ausführungsbeispiel der Ueberbrückungsschaltung in der Form einer Stromquelle und

Fig. 4 das Schaltbild eines erfindungsgemässen gleichspannungswandlers nach einer dritten Ausführungsform.

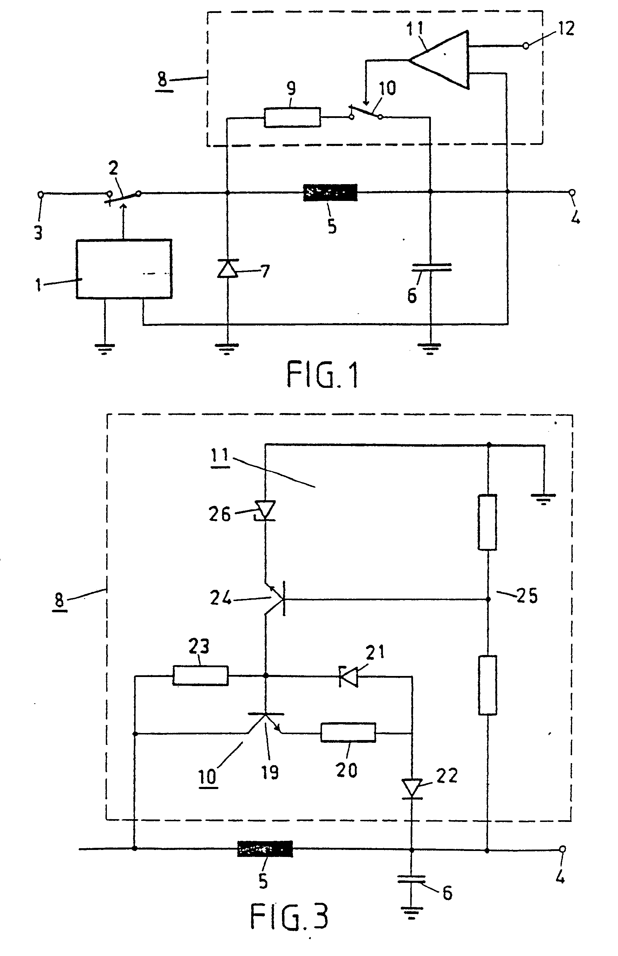

In Fig. 1 ist ein getaktetes Speisegerät dargestellt, welches in seinem grundsätzlichen Aufbau einen Pulsbreitenmodulator 1 handelsüblicher Art (z.B. SG 1225A der Firma Silicon General) enthält, welcher, von der Ausgangsspannung gesteuert, einen Schalter 2 am Eingang 3 betätigt, welchem ausgangsseitig ein Tiefpassfilter nachgeschaltet ist, bestehend aus einer zwischen dem Schalter 2 und dem Ausgang 4 liegenden Induktivität 5 und einer zwischen dem Ausgang 4 und Erde liegenden Kapazität 6. Ueber eine Freilaufdiode 7 ist der Eingang des Tiefpassfilters mit Erde verbunden.

Erfindungsgemäss ist die Induktivität 5 durch eine Ueberbrückungsschaltung 8 überbrückt. Diese enthält eine Impedanz, welche in einfachster Ausführung als Widerstand 9 ausgebildet ist und einen Schalter 10, welcher von einem Komparator 11 betäti t wird, welcher die Ausgangsspannung mit einer am Referenzeingang 12 anliegenden Referenzspannung vergleicht.

Im Normalbetrieb, d.h. wenn die Ausgangsspannung oberhalb eines Mindestwertes liegt, leitet die Ueberbrückungsschaltung 8 nicht. Der Schalter 2 öffnet, vom Pulsbreitenmodulator 1 gesteuert, periodisch für die Dauer eines Intervalls, dessen Länge jeweils von der Eingangs- und der Ausgangsspannung abhängt. Während des Intervalls, in dem die Eingangsspannung auf den Tiefpassfilter durchgeschaltet ist, steigt der Strom durch die Induktivität 5 an, da die Eingangsspannung höher als die Ausgangsspannung ist, die Diode 7 sperrt. Sperrt der Schalter 2, so fliesst durch die Diode 7 und die Induktivität 5 ein abnehmender Strom, da die Ausgangsspannung höher ist als die am Eingang des Tiefpassfilters liegende. Durch die Kapazität 6 wird die Ausgangsspannung geglättet.

Legt man an das im spannungslosen Zustand befindliche Speisegerät eine Eingangsspannung an, so wird der Komparator 11 aktiviert und vergleicht die Ausgangsspannung mit einer Referenzspannung. Da die erstere weit unter dem Mindestwert liegt, schliesst er den Schalter 10, worauf über den Widerstand 9, welcher den Strom so weit begrenzt, dass eine Ueberlastung des Schalters 10 verhindert wird, ein hoher Strom fliesst, welcher die Kapazität 5 auflädt, und zwar so lange, bis die Ausgangsspannung den Mindestwert erreicht hat, worauf der Komparator 11 den Schalter 10 öffnet. Sobald über die Induktivität 5 genügend Strom fliesst um die Ausgangsspannung oberhalb des Mindestwertes zu halten, bleibt die Ueberbrückungsschaltung 8 gesperrt und das Speisegerät arbeitet im Normalbetrieb. Den Mindestwert der Ausgangsspannung, bei dessen Unterschreiten die Ueberbrückungsschaltung 8 leitet, wird man je nach den anwendungsbedingten Anforderungen an die Spannungskonstanz festlegen. 80 % des Sollwertes dürften in den meisten Fällen ausreichen.

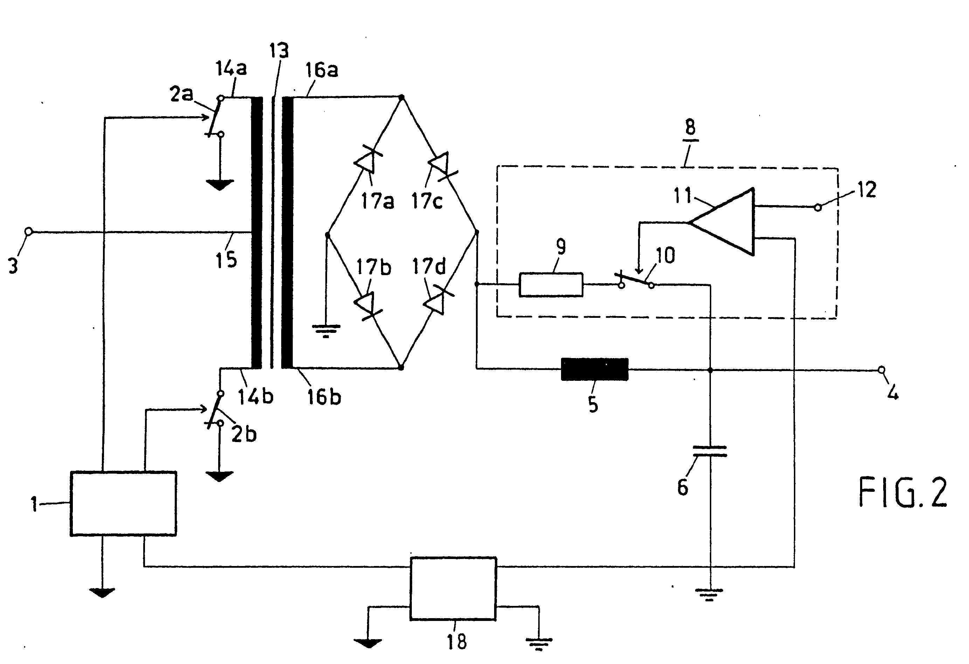

Fig. 2 zeigt ein transformatorgekoppeles getaktes Speisegerät mit Gegentaktschaltung und galvanischer Trennung von Eingang und Ausgang. Der mittlere Anschluss 15 der symmetrischen Primärwicklung des Transformators 13 ist mit dem Gleichspannungseingang 3 verbunden, die äusseren Anschlüsse 14a, 14b der Primärwicklung werden abwechslungsweise über elektronische Schalter 2a und 2b mit dem Nullpunkt des Primärkreises verbunden. Ein Pulsbreitenmodulator 1 steuert die Schliesszeiten der Schalter 2a, 2b in Abhängigkeit von der Spannung am Ausgang 4, bzw. in Abhängigkeit von einer der Ausgangsspannung proportionalen Spannung. Sekundärseitig bildet eine Anordnung bestehend aus der Sekundärwicklung mit Anschlüssen 16a, 16b sowie den Dioden 17a, 17b, 17c und 17d einen Vollweggleichrichter, dessen Ausgang mit dem Eingang eines Tiefpassfilters verbunden ist, der aus der Induktivität 5 und dem Kondensator 6 besteht. Dieser Filter bildet dann den Mittelwert der pulsbreitenmodulierten Spannung am Ausgang des Gleichrichters. Die Rückkopplung des Pulsbreitenmodulators 1 an den Ausgang 4 ist über potentialtrennende Uebertragungsmittel 18, z.B. einen Puffenverstärker (isolation amplifier), hergestellt.

Erfindungsgemäss weist das Speisegerät wiederum eine aus einer Impedanz, im einfachsten Fall einen Widerstand 9 und einen von einem Komparator 11 betätigten Schalter 10 bestehende, die Induktivität 5 überbrückende Ueberbrückungsschaltung 8 auf, wobei wiederum der Komparator 11 die Ausgangsspannung mit einer an seinem Referenzeingang 12 anliegenden Referenzspannung vergleicht.

Bei Anlegen einer Eingangsspannung an das spannungslose Speisegerät wird die Kapazität 6 wiederum so lange über die Ueberbrückungsschaltung 8 aufgeladen, bis die Ausgangsspannung den Mindestwert erreicht hat. Im Normalbetrieb leitet die Ueberbrückungsschaltung 8 nicht.

Bei beiden Ausführungsformen ist es vorteilhaft, den Schalter 10 in der Ueberbrückungsschaltung 8 als schaltbare Konstantstromquelle auszubilden, da auf diese Weise der Strom weitgehend unabhängig von der über die Ueberbrückungsschaltung abfallenden Spannung optimal dimensioniert werden kann.

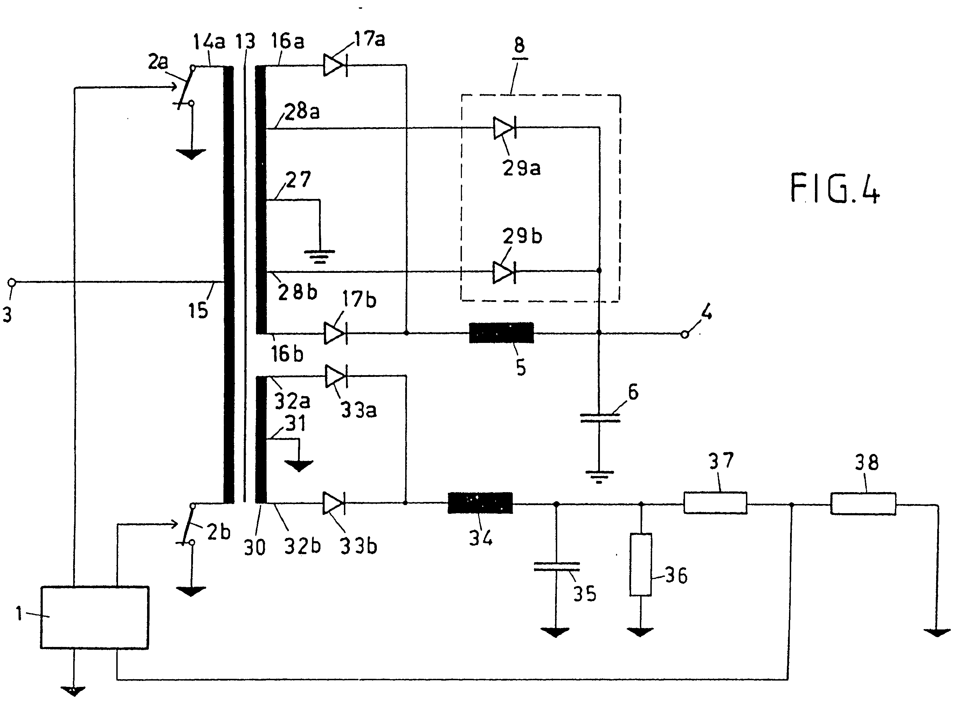

Fig. 3 zeigt ein Ausführungsbeispiel der Ueberbrückungsschaltung 8 für positive Spannungspolarität mit schaltbarer Konstantstromquelle sowie den Tiefpassfilter vor dem Ausgang 4 eines erfindungsgemässen Gleichspannungswandlers mit der überbrückten Induktivität 5 und der Kapazität 6. Die Konstantstromquelle bekannter Art wird durch einen Transistor 19, einen Emitterwiderstand 20, eine Zenerdiode 21 und einen Basis-Kollektor-Widerstand 23 gebildet. Die Zenerdioden-Spannung und der Emitterwiderstand 20 bestimmen den Wert des Stromes. Ueber eine Diode 22 wird der Emitter-Ausgang der Stromquelle mit dem Ausgang des Filters verbunden. Die Diode 22 verhindert eine Umpolung der Stromquelle während der Zeitintervalle, wo die Ausgangsspannung des Gleichrichters wegen Pulsbreitenmodulation Null ist und die Spannung am Ausgang 4 einen positiven Wert hat. Der Komparator 11 enthält einen zweiten Transistor 24 sowie einen zwischen der Ausgangsspannung und Erde liegenden Spannungsteiler 25, der denselben ansteuert, wobei der Kollektor des Transistors 24 mit der Basis des Transistors 19 verbunden und sein Emitter über eine Zenerdiode 26 geerdet ist.

Bei niedriger Ausgangsspannung ist die an der Basis des Transistors 24 liegende Spannung tiefer als die Summe der Basis-Emitterspannung des Transistors 24 und der Durchbruchspannung der Zenerdiode 26. Der Transistor 24 sperrt und der Transistor 19 leitet. Erreicht die Ausgangsspannung den Mindestwert, so wird die Spannung an der Basis des Transistors 24 so hoch, dass dieser sowie die als Referenzspannungsquelle dienende Zenerdiode 26 zu leiten beginnen. Die Basisspannung am Transistor 19 bricht zusammen und er sperrt. Diese Ausführung der Ueberbrückungsschaltung 8 ist besonders einfach und zuverlässig.

In Fig. 4 ist ein getaktetes Speisegerät dargestellt, dessen grundsätzlicher Aufbau dem des im Zusammenhang mit Fig. 2 erläuterten Speisegeräts entspricht, wenn man davon absieht, dass der Transformator 13 noch einen mittleren Aunschluss 27 aufweist, was einen einfacheren Aufbau des Vollweggleichrichters mit nur zwei Dioden 17a, 17b gestattet.

Erfindungsgemäss weist die Sekundärwicklung des Transformators 13 zwei weitere Anschlüsse 28a, 28b auf, welche jeweils, vorzugsweise symmetrisch zueinander, zwischen dem mittleren Anschluss 18 und einem der äusseren Anschlüsse 16a bzw. 16b abzweigen, während die Ueberbrückungsschaltung 8 aus zwei Dioden 29a, 29b besteht, über deren jede einer der Anschlüsse 28a, 28b an den Ausgang 4 gelegt ist. Zwischen den Anschlüssen 28a, 28b entsteht beim Betrieb des Speisegeräts eine Wechselspannung, die einen durch die relative Anzahl der zwischen ihnen liegenden Windungen gegebenen Bruchteil der Spannung zwischen den Anschlüssen 16a, 16b ausmacht. Im Normalbetrieb ist daher die von diesen letzteren gelieferte, durch die Dioden 17a, 17b gleichgerichtete und die Induktivität 5 geglättete Spannung höher als die von den Anschlüssen 28a, 28b gelieferte und durch die Dioden 29a, 29b gleichgerichtete und letztere sperren. Legt man jedoch an das spannungslose Speisegerät eine Eingangsspannung, so entsteht vorerst über die Induktivität 5 auf Grund der den Stromanstieg bremsenden Wirkung derselben ein hoher Spannungsabfall und die Kapazität 6 wird über die Dioden 29a, 29b rasch aufgeladen. Um eine galvanische Trennung zwischen dem Eingang 3 und dem Ausgang 4 zu erreichen, wird die Ausgangsspannung durch folgende Schaltung wenigstens annähernd analog nachgebildet: Eine Sekundär-Hilfswicklung 30 weist einen mittleren, mit dem Nullpotential des Primärkreises verbundenen Anschluss 31 und zwei äussere Anschlüsse 32a, 32b, die über Dioden 33a, 33b, welche einen Vollweggleichrichter bilden, mit dem Eingang eines Tiefpassfilters verbunden sind, auf. Der Tiefpassfilter besteht aus einer weiteren Induktivität 34 und einer weiteren Kapazität 35, zu der ein Widerstand 36 parallel gelegt ist. An seinem Ausgang liegt ein aus Widerständen 37, 38 gebildeten Spannungsteiler, von welchem die den Pulsbreitenmodulator 1 steuernde Spannung abgenommen wird. Eine galvanische Verbindung desselben mit dem Ausgang 4 ist dadurch vermieden.

Diese Ausführung ist vor allem dann als besonders einfach, zuverlassig und kostengünstig zu empfehlen, wenn der Wert der Eingangsspannung zum Zeitpunkt des Einschaltens genau bekannt ist und mit einer wesentlichen Erhöhung über diesen Wert im Betrieb nicht gerechnet werden muss.

Die im Zusammenhang mit Fig. 2 und Fig. 4 dargestellten Einrichtungen zur Rückkopplung mit galvanischer Trennung können natürlich auch mit der jeweils anderen Ausführung der Erfindung kombiniert werden oder gegebenenfalls auch ganz entfallen und der Ausgang 4 wie in der Ausführung gemäss Fig. 1 direkt oder über eine Impedanz mit dem Pulsbreitenmodulator 1 verbunden werden.

**Patentansprüche**

1. Getaktetes Speisegerät mit Gleichspannungseingang(3), das im Normalbetrieb an seinem Ausgang (4) eine wenigstens annähernd einem Sollwert entsprechende Ausgangsspannung erzeugt, mit einem von der Ausgangsspannung gesteuerten Pulsbreitenmodulator (1) und mindestens einem von diesem betätigten Schalter (2, 2a, 2b), sowie ausgangsseitig einem aus einer Induktivität (5) und einer Kapazität (6) aufgebauten Tiefpassfilter, dadurch gekennzeichnet, dass es eine die Induktivität (5) überbrückende Ueberbrückungsschaltung (8) enthält, deren Impedanz höchstens einen im Vergleich mit besagter Induktivität (5) geringen induktiven Anteil aufweist und welche leitet, falls die Ausgangsspannung unterhalb eines Mindestwertes, welcher nicht höher als der Sollwert derselben ist, liegt.

2. Getaktetes Speisegerät nach Anspruch 1, dadurch gekennzeichnet, dass der Mindestwert der Ausgangsspannung, bei dessen Unterschreiten die Ueberbrückungsschaltung (8) leitet, mindestens 60 % des Sollwerts der Ausgangsspannung beträgt.

3. Getaktetes Speisegerät nach Anspruch 1 oder 2, bei welchem ein vom Pulsbreitenmodulator (1) betätigter Schalter (2) zwischen dem Eingang (3) und dem Tiefpassfilter liegt, mit einer Freilaufdiode (7), über welche der Eingang des Tiefpassfilters mit Erde verbunden ist, dadurch gekennzeichnet, dass die Ueberbrückungsschaltung (8) einen Schalter (10) enthält, der von einem Komparator (11), welcher die Ausgangsspannung mit einer Referenzspannung vergleicht, betätigt wird.

4. Getaktetes Speisegerät nach Anspruch 1 oder 2, mit einem Transformator (13), dessen Primärwicklung zusätzlich zu den äusseren Anschlüssen (14a, 14b) einen mittleren Anschluss (15) aufweist, welcher mit dem Eingang (3) verbunden ist, während die äusseren Anschlüsse (14a, 14b) je über einen vom Pulsbreitenmodulator (1) betätigten Schalter (2a, 2b) mit Erde verbunden sind und dem auf der Sekundärseite ein Vollweggleichrichter, (17a-17d) nachgeschaltet ist, dessen Ausgang mit dem Eingang des Tiefpassfilters (5,6) verbunden ist, dadurch gekennzeichnet, dass die Ueberbrückungsschaltung (8) einen Schalter (10) enthält, der von einem Komparator (11), welcher die Ausgangsspannung mit einer Referenzspannung vergleicht, betätigt wird. (Fig.2,4)

5. Getaktetes Speisegerät nach Anspruch 3 oder 4, dadurch gekennzeichnet, dass die in der Ueberbrückungsschaltung (8) enthaltene Impedanz (9) und der Schalter (10) als schaltbare Konstantstromquelle ausgebildet sind.

6. Getaktetes Speisegerät nach Anspruch 5, dadurch gekennzeichnet, dass die schaltbare Konstantstromquelle einen ersten Transistor (19) enthält, dessen Emitter einerseits über einen Emitterwiderstand (20) und eine Zenerdiode (21) mit dessen Basis, andererseits über den Emitterwiderstand (20) und eine Diode (22) mit dem Ausgang der Ueberbrückungsschaltung (8) verbunden ist und dessen Kollektor am Eingang der Ueberbrückungsschaltung (8) liegt und über einen Basis-Kollektor-Widerstand (23) mit dessen Basis verbunden ist und dass der Komparator (11) einen zweiten Transistor (24) enthält sowie einen zwischen der Ausgangspannung und Erde liegenden Spannungsteiler (25), der denselben ansteuert, wobei der Kollektor des zweiten Transistors (24) mit der Basis des ersten Transistors (19) verbunden und sein Emitter über eine als Referenzspannungsquelle dienende Zenerdiode (26) geerdet ist. (Fig. 3)

7. Getaktetes Speisegerät nach Anspruch 1 oder 2, mit einem Transformator (13), dessen Primärwicklung zusätzlich zu den äusseren Anschlüssen (14a, 14b) einen mittleren Anschluss (15) aufweist, welcher mit dem Eingang (3) verbunden ist, während die äusseren Anschlüsse (14a, 14b) je über einen vom Pulsbreitenmodulator (1) betätigten Schalter (2a, 2b) mit Erde verbunden sind und dem auf der Sekundärseite ein Vollweggleichrichter nachgeschaltet ist, dessen Ausgang mit dem Eingang des Tiefpassfilters verbunden ist, dadurch gekennzeichnet, dass die Sekundärwicklung zwei weitere Anschlüsse (28a, 28b) aufweist, welche jeweils zwischen der Mitte derselben und einem der äusseren Anschlüsse (16a, 16b) abzweigen und dass die Ueberbrückungsschaltung (8) gleichfalls einen Vollweggleichrichter enthält, der zwischen die besagten weiteren Anschlüsse (28a, 28b) und den Ausgang (4) gelegt ist. (Fig. 4).

8. Getaktetes Speisegerät nach Anspruch 4 oder 7, dadurch gekennzeichnet, dass der Eingang (3) vom Ausgang (4) galvanisch getrennt ist.

9. Getaktetes Speisegerät nach Anspruch 8, dadurch gekennzeichnet, dass die Sekundärwicklung und die Primärwicklung des Transformators (13) voneinander isoliert sind und die Verbindung des Ausgangs (4) mit dem Pulsbreitenmodulator (1) über potentialtrennende Uebertragungsmittel (18) hergestellt ist.

10. Getaktetes Speisegerät nach Anspruch 8, dadurch gekennzeichnet, dass der Transformator (13) eine Sekundär-Hilfswicklung (30) mit nachgeschaltetem Vollweggleichrichter und aus einer weiteren Induktivität (34) und einer weiterenKapazität (36) bestehenden Tiefpassfilter aufweist, dessen Ausgang mit dem Pulsbreitenmodulator (1) verbunden ist. (Fig. 4).

**Claims:**

1. Pulse-switched power supply unit having a directvoltage input (3), which unit, in normal operation, generates at its output (4) an output voltage which at least approximately corresponds to a nominal value, comprising a pulse-width modulator (1), which is controlled by the output voltage, and at least one switch (2, 2a, 2b) which is actuated by this modulator, and, at the output side, a lowpass filter constructed of an inductance (5) and a capacitance (6), characterised in that it contains a bridging circuit (8) which bridges the inductance (5) and the impedance of which at the most has an inductive component which is low in comparison with the said inductance (5) and which bridging circuit conducts if the output voltage is below a minimum value which is no higher than the nominal value of the latter.

2. Pulse-switched power supply unit according to Claim 1, characterised in that the minimum value of the output voltage, which minimum value causes the bridging circuit (8) to conduct if the output voltage drops below it, is at least 60% of the nominal value of the output voltage.

3. Pulse-switched power supply unit according to Claim 1 or 2, in which a switch (2) actuated by the pulse-width modulator (1) is located between the input (3) and the lowpass filter, comprising a freewheeling diode (7) via which the input of the low-pass filter is connected to earth, characterised in that the bridging circuit (8) contains a switch (10) which is actuated by a comparator (11) which compares the output voltage with a reference voltage.

4. Pulse-switched power supply unit according to Claim 1 or 2, containing a transformer (3) the primary winding of which, in addition to the outer connections (14a, 14b), has a centre connection (15) which is connected to the input (3) whilst the outer connections (14a, 14b) are each connected to earth via a switch (2a, 2b) actuated by the pulse-width modulator (1), and which transformer is followed on its secondary side by a full-wave rectifier (17a-17d) the output of which is connected to the input of the lowpass filter (5, 6), characterised in that the bridging circuit (8) contains a switch (10) which is actuated by a comparator (11) which compares the output voltage with a reference voltage (Figure 2, 4).

5. Pulse-switched power supply unit according to Claim 3 or 4, characterised in that the impedance (9) contained in the bridging circuit (8) and the switch (10) are constructed as a switchable constant-current source.

6. Pulse-switched power supply unit according to Claim 5, characterised in that the switchable constant-current source contains a first transistor (19) the emitter of which is connected, on the one hand, via an emitter resistor (20) and a zener diode (21) to its base and, on the other hand, via the emitter resistor (20) and a diode (22) to the output of the bridging circuit (8) and the collector of which is connected to the input of the bridging circuit (8) and is connected via a base-collector resistor (23) to its base, and that the comparator (11) contains a second transistor (24) and a voltage divider (25) which is located between the output voltage and earth and which drives this second transistor, in which arrangement the collector of the second transistor (24) is connected to the base of the first transistor (19) and its emitter is earthed via a zener diode (26) serving as a reference voltage source (Figure 3).

7. Pulse-switched power supply unit according to Claim 1 or 2, comprising a transformer (13) the primary winding of which, in addition to the outer connections (14a, 14b) has a centre connection (15) which is connected to the input (3) whilst the outer connections (14a, 14b) are each connected to earth via a switch (2a, 2b) which can be actuated by the pulse-width modulator (1), and which transformer is followed on its secondary side by a fullwave rectifier the output of which is connected to the input of the low-pass filter, characterised in that the secondary winding has two other connections (28a, 28b) which in each case branch off between the centre of the secondary winding and one of the outer connections (16a, 16b) and that the bridging circuit (8) also contains a fullwave rectifier which is placed between the said other connections (28a, 28b) and the output (4) (Figure 4).

8. Pulse-switched power supply unit according to Claim 4 or 7, characterised in that the input (3) is electrically separated from the output (4).

9. Pulse-switched power supply unit according to Claim 8, characterised in that the secondary winding and the primary winding of the transformer (13) are insulated from each other and the output (4) is connected to the pulsewidth modulator (1) via potential-isolating transfer means (18).

10. Pulse-switched power supply unit according to Claim 8, characterised in that the transformer (13) is provided with an auxiliary secondary winding (30) followed by a fullwave rectifier and a low-pass filter consisting of another inductance (34) and another capacitance (36), the output of which filter is connected to the pulse-width modulator (1) (Figure 4).

**Revendications**

1.- Bloc d'alimentation à commutation avec entrée en tension continue (3) qui, en fonctionnement normal, produit sur sa sortie (4) une tension de sortie correspondant approximativement à une valeur de consigne, comportant un modulateur d'impulsions en durée (1) piloté par la tension de sortie et au moins un commutateur (2, 2a, 2b) actionné par ce modulateur, ainsi que, du côté de sortie, un filtre passe-bas constitue d'une inductance (5) et d'un condensateur, caractérisé en ce qu'il comprend un circuit de shuntage (8) pontant l'inductance (5), dont l'impédance présente tout au plus une partie inductive faible comparée à la dite inductance (5) et qui est conducteur, au cas où la tension de sortie se situe en dessous d'une valeur minimum qui n'est pas supérieure à sa valeur de consigne.

2.- Bloc d'alimentation à commutation suivant la revendication 1, caractérisé en ce que la valeur minimum de la tension de sortie dont le dépassement par défaut provoque le passage sur conduction du circuit de shuntage (8), est egale au moins à 60% de la valeur de consigne de la tension de sortie.

3.- Bloc d'alimentation à commutation suivant la revendication 1 ou 2, pour lequel un commutateur (2) actionné par le modulateur d'impulsions en durée est prévu entre l'entrée (3) et le filtre passe-bas, une diode de roue libre (7) étant prévue pour connecter l'entrée du filtre passe-bas a la terre, caractérisé en ce que le circuit de shuntage (8) comprend un commutateur (10) qui est actionné par un comparateur (11) qui compare la tension de sortie à une tension de référence.

4.- Bloc d'alimentation à commutation suivant la revendication 1 ou 2, pourvu d'un transformateur (13) dont l'enroulement primaire présente, en plus des bornes extérieures (14a, 14b), une borne médiane (15) qui est connectée à l'entrée (3), tandis que les bornes extérieures (14a, 14b) sont chacune mises à la terre par l'intermédiaire d'un commutateur (2a, 2b) actionné par le modulateur d'impulsions en durée (1) et qui est suivi, du côté de son secondaire, d'un redresseur des deux alternances (17a, 17d) dont la sortie est connectée à l'entrée du filtre passe-bas (5, 6), caractérisé en ce que le circuit de shuntage (8) comprend un commutateur (10) qui est actionné (Fig. 2, 4) par un comparateur (11) qui compare la tension de sortie à une tension de référence.

5.- Bloc d'alimentation à commutation suivant la revendication 3 ou 4, caractérisé en ce que l'impédance (9) contenue dans le circuit de shuntage (8) et le commutateur (10) constituent une source de courant constant commutable.

6.- Bloc d'alimentation à commutation suivant la revendication 5, caractérisé en ce que la source de courant constant commutable comprend un premier transistor (19) dont l'émetteur est connecté d'une part par l'intermédiaire d'une résistance d'émetteur (20) et d'une diode Zener (21) à sa base et, d'autre part, par l'intermédiaire d'une résistance d'émetteur (20) et d'une diode (22) à la sortie du circuit de shuntage (8) et dont le collecteur est connecté à l'entrée du circuit de shuntage (8) et, par l'intermédiaire d'une resistance de base-collecteur (23), à sa base, et le comparateur (11) comprend un second transistor (24) ainsi qu'un diviseur de tension (25) dispose entre la tension de sortie et la terre et qui pilote ce transistor, étant entendu que le collecteur du second transistor (24) est connecte à la base du premier transistor (19) et que son émetteur est mis à la terre (Fig. 3) par l'intermédiaire d'une diode Zener (26) servant de source de tension de référence.

7.- Bloc d'alimentation à commutation suivant la revendication 1 ou 2, comportant un transformateur (13) dont l'enroulement primaire présente, en plus des bornes extérieures (14a, 14b), une borne médiane (15) qui est connectée à l'entrée (3), tandis que les bornes extérieures (14a, 14b) sont connectées chacune à la terre par l'intermédiaire d'un commutateur (2a, 2b) actionné par le modulateur d'impulsions en durée (1), et qui est suivi du côté de son secondaire d'un redresseur des deux alternances dont la sortie est connectée à l'entrée du filtre passe-bas, caractérisé en ce que l'enroulement secondaire présente deux autres bornes (28a, 28b) qui sont chacune branchées entre le milieu de l'enroulement et une des bornes extérieures (16a, 16b) et le circuit de shuntage (8) comprend également un redresseur des deux alternances qui est dispose entre les autres bornes (28a, 28b) et la sortie (4) (Fig. 4).

8.- Bloc d'alimentation à commutation suivant la revendication 4 ou 7, caractérisé en ce que l'entrée (3) est séparée galvaniquement de la sortie (4).

9.- Bloc d'alimentation à commutation suivant la revendication 8, caractérisé en ce que l'enroulement secondaire et l'enroulement primaire du transformateur (13) sont isolés l'un de l'autre et la liaison de la sortie (4) au modulateur d'impulsions en durée (1) est établie par l'intermédiaire de moyens de transmission séparateurs de potentiel (18).

10.- Bloc d'alimentation à commutation suivant la revendication 8, caractérisé en ce que le transformateur (13) comporte un enroulement secondaire (30) suivi d'un redresseur des deux alternances et présente un filtre passe-bas constitué d'une autre inductance (34) et d'un autre condensateur (36) dont la sortie est connectée (Fig. 4) au modulateur d'impulsions en durée (1).

FIG.1

FIG.3

FIG.2

FIG.4